# EUROPÄISCHE PATENTSCHRIFT

(11) **EP 2 236 964 B1**
(45) Veröffentlichungstag und Bekanntmachung des Hinweises auf die Patenterteilung: **20.11.2019**
(21) Anmeldenummer: 09008224.9
(22) Anmeldetag: 23.06.2009
(51) Int. Cl.: F25J 3/04

(54) **Verfahren und Vorrichtung zur Tieftemperatur-Luftzerlegung**
Method and device for low-temperature air separation
Procédé et dispositif de séparation de l'air à basse température

(30) Priorität: 24.03.2009 DE 102009014557
(43) Veröffentlichungstag der Anmeldung: 06.10.2010
(73) Patentinhaber: Linde AG, 80331 München (DE)
(72) Erfinder: Lochner, Stefan, 85567 Grafing (DE)
(74) Vertreter: Imhof, Dietmar

(56) Entgegenhaltungen:
- US-A- 5 363 657
- US-A- 5 582 034
- US-A- 5 711 167
- US-A- 6 044 902
- US-A1- 2003 110 796

## Beschreibung

Die Erfindung betrifft ein Verfahren zur Tieftemperatur-Luftzerlegung gemäß dem Oberbegriff des Patentanspruchs 1.

Ähnliche Prozesse mit Restgasrückführung sind bekannt aus DE 2261234, US 4966002, US 5363657, US 5528906, US 5934106, US 5611218, US 5582034, US 2004244417, DE 19909744 A1, DE 19919933 A1, DE 19954593 A1, US 2007204652 A1, DE 102006027650 A1 und EP 1995537 A2. Dabei wird auch in US 4966002 und US 5582034 ein Unterkühlungs-Gegenströmer eingesetzt, in dem die flüssige sauerstoffhaltige Rückführfraktion "unterkühlt", also unter ihren Siedepunkt abgekühlt wird.

Unter "Einzelsäule" wird hier eine Destilliersäule verstanden, die in einem einheitlichen Druckbereich betrieben wird - das heißt der Druckunterschied zwischen Kopf und Sumpf der Säule beruht ausschließlich auf dem Druckverlust des in der Säule aufsteigenden Dampfs - und in die sowohl die Einsatzluft als Haupteinsatzfraktion eingespeist als auch das Stickstoffprodukt in Form eines Teils der im oberen Bereich der Säule anfallenden stickstoffreichen Fraktion erzeugt wird. Doppel- oder Dreifachsäule-Verfahren zur Stickstoff-Sauerstoff-Trennung sind damit nicht umfasst. Nicht ausgeschlossen ist jedoch eine Reinsauerstoffsäule, die an die Einzelsäule angeschlossen ist und als reine Abtriebssäule betrieben wird.

Verfahren und Vorrichtungen zur Tieftemperaturzerlegung von Luft sind allgemein in Hausen/Linde, Tieftemperaturtechnik, 2. Auflage 1985, Kapitel 4 (Seiten 281 bis 337) beschrieben, ein Verfahren der oben genannten Art in US 5711167.

Der Erfindung liegt die Aufgabe zugrunde, ein Verfahren der eingangs genannten Art und eine entsprechende Vorrichtung anzugeben, die wirtschaftlich besonders günstig sind.

Diese Aufgabe wird durch die kennzeichnenden Merkmale des Patentanspruchs 1 gelöst.

Überraschenderweise ermöglicht es die Anwendung eines integrierten Wärmeaustauschers, der die Funktionen eines Hauptwärmetauschers und eines Unterkühlungs-Gegenströmers vereinigt, jegliche Vorverflüssigung der Luft zu vermeiden. Dadurch kann die gesamte Luft in der Säule aufsteigen und an der Rektifikation teilnehmen, die Trennwirkung wird höher und insgesamt ist das erfindungsgemäße Verfahren daher besonders günstig. Die genaue Auslegung des integrierten Wärmeaustauschers hängt dabei von den Randbedingungen des Einzelfalls ab und ist für jede Anlage mit den üblichen Berechnungswerkzeugen des Verfahrensingenieurs festzulegen.

Daneben vereinfacht die erfindungsgemäße Integration die Bauweise bezüglich der Verrohrung deutlich. Da der Unterkühiungs-Gegenströmer durch die Integration in den Hauptwärmetauscher einen wesentlich größeren Querschnitt bekommt, wird den im Kreuzstrom zu den Gasströmen geführten Flüssigströmen optimale Heizfläche angeboten. In der Coldbox muss nur ein Wärmetauscher abgestützt und verrohrt werden. Die absolute Zahl der Header beider Wärmetauscher sinkt. Die Gasströme (Restgas zur Turbine, Produktstickstoff, Restgas aus der Turbine) vom Kopf der Coldbox müssen nicht über zwei Fixpunkte (Unterkühlungs-Gegenströmer und Hauptwärmetauscher) geführt werden. Dehnschleifen können entfallen, die integrierte Lösung ermöglicht einen Rohrverlauf mit minimierten Rohrspannungen.

Aus Luftzerlegungsverfahren mit zwei oder mehr Säulen zur Stickstoff-Sauerstoff-Trennung ist eine Integration von Hauptwärmetauscher und Unterkühlungs-Gegenströmer zwar bekannt. Von der Anwendung dieser Maßnahme auf Verfahren der eingangs genannten Art wurde jedoch bisher abgesehen, weil der Herstellungsaufwand eines besonders langen integrierten Wärmeaustauschers bei Einzelsäulenprozessen nicht gerechtfertigt erschien. Die überraschende Wirkung der Vermeidung der Vorverflüssigung der Luft war bisher unbekannt.

Grundsätzlich kann jeder Wärmetauschertyp als integrierter Wärmeaustauscher in dem erfindungsgemäßen Verfahren eingesetzt werden, beispielsweise ein schraubenförmig gewickelter Wärmeaustauscher oder auch ein Geradrohrtauscher. Besonders günstig ist jedoch die Verwendung eines Plattenwärmetauschers, insbesondere eines gelöteten Aluminium-Plattenwärmetauschers. In diesem Fall wird der integrierte Wärmeaustauscher durch einen einzigen Plattenwärmetauscher-Block gebildet.

Es ist besonders kostengünstig, wenn die Einzelsäule die einzige Destilliersäule des Destilliersäulen-Systems darstellt.

Zur Erzeugung von Kälteleistung kann eine weitere sauerstoffhaltige Fraktion arbeitsleistend entspannt werden, wie es in Patentanspruch 4 im Einzelnen erläutert ist. Der integrierte Wärmeaustauscher wird auch für die Unterkühlung der weiteren sauerstoffhaltigen Fraktion genutzt, indem die flüssige weitere sauerstoffhaltige Fraktion vor ihrer Verdampfung in dem Unterkühlungs-Gegenströmer abgekühlt wird. Die erfindungsgemäße Integration ermöglicht es, die flüssige weitere sauerstoffhaltige Fraktion oberhalb der Temperatur der Luftentnahme in den Wärmeaustauscher einzuführen. Die Temperaturdifferenz beträgt beispielsweise 0,2 bis 5 K. Dies trägt zur Vermeidung der Vorverflüssigung bei.

Zusätzlich wird die verdampfte weitere sauerstoffhaltige Fraktion vor ihrer arbeitsleistenden Entspannung in dem integrierten Wärmeaustauscher im Gegenstrom zu Luft angewärmt.

Die weitere sauerstoffhaltige Fraktion kann beispielsweise dieselbe Zusammensetzung wie die Rückführfraktion aufweisen. In diesem Fall können die beiden Fraktionen bis hinter den Kopfkondensator in gemeinsamen Leitungen und Passagen geführt werden.

Alternativ wird die sauerstoffhaltige Rückführfraktion an einer Zwischenstelle aus der Einzelsäule entnommen wird, die mindestens einen theoretischen beziehungsweise praktischen Boden oberhalb der Stelle liegt, an der die weitere sauerstoffhaltige Fraktion entnommen. In diesem Fall müssen für die beiden Fraktionen getrennte Leitungen und getrennte Passagen in dem Kopfkondensator und gegebenenfalls in dem Unterkühlungs-Gegenströmer vorgesehen sein.

Vorteilhafterweise sind die Entspannungsmaschine (21) mechanisch mit dem Rückverdichter (31) gekoppelt. Dadurch wird die bei der arbeitsleistenden Entspannung gewonnene mechanische Energie zur Rückverdichtung eingesetzt. Vorzugsweise ist dies die einzige Energiequelle für den Antrieb des Rückverdichters.

Es ist günstig, wenn der Rückverdichter (30) als Kaltverdichter ausgebildet ist. Unter "Kaltverdichter" wird hier ein Apparat verstanden, in dem das Gas der Verdichtung bei einer Temperatur zugeführt wird, die deutlich unterhalb der Umgebungstemperatur liegt, im allgemeinen unterhalb von 250 K, vorzugsweise unterhalb von 200 K.

Es ist ferner günstig, wenn bei dem erfindungsgemäßen Verfahren die rückverdichtete Rückführfraktion vor ihrer Einleitung in den unteren Bereich der Einzelsäule in dem integrierten Wärmeaustauscher abgekühlt wird, wobei rückverdichtete Rückführfraktion vollständig gasförmig aus dem integrierten Wärmeaustauscher abgezogen und vollständig gasförmig in die Einzelsäule eingeleitet wird. Auch die Rückführfraktion ist damit frei von Vorverflüssigung und nimmt vollständig als aufsteigender Dampf an der Rektifikation in der Einzelsäule teil. Damit ist bei beiden Einsatzströmen für die Einzelsäule, nämlich bei der Einsatzluft und bei der Rückführfraktion, die Vorverflüssigung vollständig vermieden.

Die Erfindung betrifft außerdem eine Vorrichtung gemäß dem Patentanspruch 8.

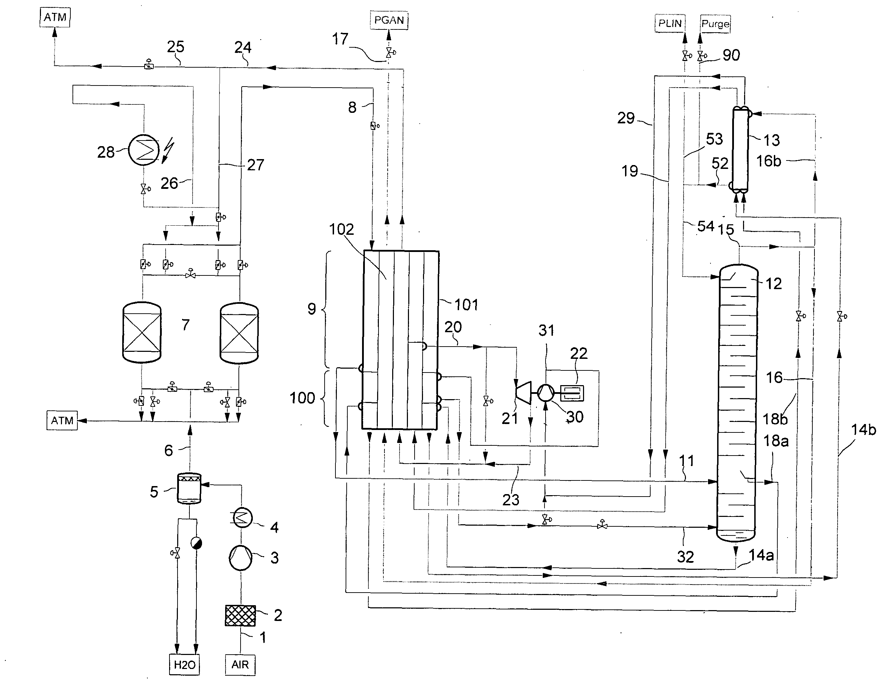

Die Erfindung sowie weitere Einzelheiten der Erfindung werden im Folgenden anhand eines in der Zeichnung schematisch dargestellten Ausführungsbeispiels näher erläutert.

Atmosphärische Luft 1 wird über ein Filter 2 von einem Luftverdichter 3 angesaugt und dort auf einen Absolutdruck von 6 bis 20 bar, vorzugsweise etwa 9 bar verdichtet. Nach Durchströmen eines Nachkühlers 4 und eines Wasserabscheiders 5 wird die verdichtete Luft 6 in einer Reinigungsvorrichtung 7 gereinigt. Die Reinigungsvorrichtung 7 weist ein Paar von Behältern auf, die mit Adsorptionsmaterial, vorzugsweise Molekularsieb, gefüllt sind. Die gereinigte Luft 8 wird in einem Hauptwärmetauscher 9 auf etwas über Taupunkt abgekühlt und schließlich als vollständig gasförmiger Einsatzluftstrom 11 in eine Einzelsäule 12.

Der Betriebsdruck der Einzelsäule 12 (am Kopf) beträgt 6 bis 20 bar, vorzugsweise etwa 9 bar. Ihr Kopfkondensator wird mit einer sauerstoffhaltigen Rückführfraktion 18a, 18b und einer weiteren sauerstoffhaltigen Fraktion 14a, 14b gekühlt. Die weitere sauerstoffhaltige Fraktion 14a wird vom Sumpf der Einzelsäule 12 abgezogen, die Rückführfraktion 18a von einer Zwischenstelle einige praktische oder theoretische Böden weiter oben. Beide Fraktionen 14a, 18a werden vor ihrer Einspeisung 14b, 18b in den Kopfkondensator 13 in einem Unterkühlungs-Gegenströmer 100 abgekühlt, wobei Hauptwärmetauscher 9 und Unterkühlungs-Gegenströmer 100 erfindungsgemäß durch einen integrierten Wärmeaustauscher 101 gebildet werden, der hier als einzelner Plattenwärmetauscherblock realisiert ist. Die Höhendifferenz zwischen dem Austritt des Stroms 14a aus der Einzelsäule 12 (genauer: dem Flüssigkeitsstand im Sumpf der Säule) und dem Eintritt in den integrierten Wärmeaustauscher 101 ist grundsätzlich so zu wählen, dass der Gasanteil durch die Entspannung unter 5 vol-% liegt. Liegt abweichend davon der Gasanteil höher als 5 vol-%, ist im Header über den ganzen Bereich über dem Eintritt in die Passagen ein perforiertes Blech anzubringen, dessen Druckverlust so gewählt wird, dass die Gasblasen über alle Passagen verteilt werden. Anschließend wird das Zweiphasengemisch in dem integrierten Wärmeaustauscher zunächst quer zu den übrigen Strömen geführt (gegebenenfalls mit einer oder mehreren Umlenkungen), in denen der Gasanteil komplett kondensiert wird, also die benachbarten Passagen in jedem Betriebsfall entsprechend kälter sind.

Als Hauptprodukt der Einzelsäule 12 wird gasförmiger Stickstoff 15, 16 am Kopf abgezogen, und als erster Rückstrom durch eine Passagengruppe 102 geführt, die vom kalten bis zum warmen Ende des integrierten Wärmeaustauschers durchgeht. Dabei tritt der Rückstrom im Bereich des Unterkühlungs-Gegenströmers 100 in indirekten Wärmeaustausch mit den beiden sauerstoffhaltigen Fraktionen 14a, 18a und anschließend, im Bereich des Hauptwärmetauschers 9, in indirekten Wärmeaustausch mit dem Einsatzluftstrom 8. Über Leitung 17 wird er schließlich unter etwa Umgebungstemperatur als gasförmiges Druckprodukt (PGAN) abgezogen.

Der Rest 16b des gasförmigen Stickstoffs 15 wird im Kopfkondensator 13 vollständig oder im Wesentlichen vollständig kondensiert. Ein Teil 53 des Kondensats 52 aus dem Kopfkondensator 13 kann als Flüssigstickstoffprodukt (PLIN) gewonnen werden; der Rest 54 wird als Rücklauf auf den Kopf der Einzelsäule aufgegeben. Über eine Spülleitung 90 können nichtkondensierte Bestandteile abgezogen werden.

Die Rückführfraktion 18b wird im Kopfkondensator 13 unter einem Druck von 2 bis 9 bar, vorzugsweise etwa 4 bar verdampft und strömt gasförmig über Leitung 29 zu einem Kaltverdichter 30, in dem sie auf etwa auf einen Druck rückverdichtet wird, der ausreicht, um sie in die Einzelsäule zurückzuführen. Die rückverdichtete Rückführfraktion 31 wird im Unterkühlungs-Gegenströmer 100 wieder auf Säulentemperatur abgekühlt und vollständig gasförmig über Leitung 32 der Einzelsäule 12 am Sumpf wieder zugeführt.

Die weitere sauerstoffhaltige Fraktion 14b wird im Kopfkondensator 13 unter einem Druck von 2 bis 9 bar, vorzugsweise etwa 4 bar verdampft und strömt gasförmig über Leitung 19 zum kalten Ende des integrierten Wärmeaustauschers 101. Dort tritt sie im Bereich des Unterkühlungs-Gegenströmers 100 in indirekten Wärmeaustausch mit den beiden flüssigen sauerstoffhaltigen Fraktionen 14a, 18a und anschließend, im Bereich des Hauptwärmetauschers 9, in indirekten Wärmeaustausch mit dem Einsatzluftstrom 8. Bei einer Zwischentemperatur wird sie wieder aus dem Hauptwärmetauscher 9 entnommen (Leitung 20) und in einer Entspannungsmaschine 21, die in dem Beispiel als Turboexpander ausgebildet ist, arbeitsleistend auf etwa 300 mbar über Atmosphärendruck entspannt. Die Entspannungsmaschine ist mechanisch gekoppelt mit dem Kaltverdichter 30 und einer Bremseinrichtung 22, die in dem Ausführungsbeispiel durch eine Ölbremse gebildet wird. Die entspannte weitere Fraktion 23 wird im integrierten Wärmeaustauscher 101 auf etwa Umgebungstemperatur angewärmt. Die warme weitere Fraktion 24 wird in die Atmosphäre abgeblasen (Leitung 25) und/oder als Regeneriergas 26, 27 in der Reinigungsvorrichtung 7 eingesetzt, gegebenenfalls nach Erhitzung in der Heizeinrichtung 28.

Bei dem Ausführungsbeispiel ist der Kopfkondensator 13 als Forced-Flow-Verdampfer ausgebildet. Alternativ kann ein Badverdampfer oder ein Fallfilmverdampfer eingesetzt werden.

## Patentansprüche

1. Verfahren zur Tieftemperatur-Luftzerlegung in einem Destilliersäulen-System, das mindestens eine Einzelsäule (12) aufweist, wobei
- ein verdichteter Einsatzluftstrom (6, 8) in einem Hauptwärmetauscher (9) im Gegenstrom zu einem ersten Rückstrom (16, 23) aus dem Destilliersäulen-System abgekühlt wird,
- der abgekühlte Einsatzluftstrom (11) in die Einzelsäule (12) eingeleitet wird,
- im oberen Bereich der Einzelsäule (12) eine stickstoffreiche Fraktion (15) erzeugt wird,
- mindestens ein Teil (16b) der stickstoffreichen Fraktion (15) in einem Kopfkondensator (13) kondensiert wird, der als Kondensator-Verdampfer ausgebildet ist,
- die in dem Kopfkondensator (13) erzeugte flüssige stickstoffreiche Fraktion (52) mindestens zum Teil (54) als Rücklauf in die Einzelsäule (12) eingeleitet wird,
- eine sauerstoffhaltige Rückführfraktion (18a) flüssig aus der Einzelsäule (12) abgezogen wird,
- die flüssige Rückführfraktion (18a) in einem Unterkühlungs-Gegenströmer (100) abgekühlt wird,
- die abgekühlte Rückführfraktion (18b) in dem Kopfkondensator (13) verdampft wird,
- die verdampfte Rückführfraktion (29) in einem Rückverdichter (30) rückverdichtet wird, wobei der Rückverdichter (30) als Kaltverdichter ausgebildet ist,
- die rückverdichtete Rückführfraktion (31, 32) am Sumpf der Einzelsäule (12) zugeführt wird,
- der Hauptwärmetauscher (9) und der Unterkühlungs-Gegenströmer (100) durch einen integrierten Wärmeaustauscher (101) gebildet werden, wobei
- der integrierte Wärmeaustauscher (101) eine erste Passagengruppe für den ersten Rückstrom (16, 23) aufweist, die vom kalten bis zum warmen Ende des integrierte Wärmeaustauschers durchgeht,
- der erste Rückstrom (16, 23) am kalten Ende in diese Passagengruppe (102) eingeleitet wird und den integrierten Wärmeaustauscher (101) bis zu seinem warmen Ende durchströmt und dabei
- sowohl mit der flüssigen Rückführfraktion (18a) als auch mit dem Einsatzluftstrom (8) in indirekten Wärmeaustausch gebracht wird,
- wobei der abgekühlte Einsatzluftstrom (11) vollständig gasförmig aus dem integrierten Wärmeaustauscher (101) abgezogen und gasförmig in die Einzelsäule (12) eingeleitet wird,
**dadurch gekennzeichnet, dass**
- der erste Rückstrom (16, 23) erst im Bereich des Unterkühlungs-Gegenströmers (100) in indirekten Wärmeaustausch mit der flüssigen Rückführfraktion (18a) und anschließend, im Bereich des Hauptwärmetauschers (9), in indirekten Wärmeaustausch mit dem Einsatzluftstrom (8) gebracht wird,
- der abgekühlte Einsatzluftstrom (11) vollständig gasförmig in die Einzelsäule (12) eingeleitet wird und
- die rückverdichtete Rückführfraktion (31) vor ihrer Einspeisung am Sumpf der Einzelsäule (12) im Unterkühlungs-Gegenströmer (100) wieder auf Säulentemperatur abgekühlt und vollständig gasförmig der Einzelsäule zugeführt wird.

2. Verfahren nach Anspruch 1, **dadurch gekennzeichnet, dass** der integrierte Wärmeaustauscher durch einen einzigen Plattenwärmetauscher-Block gebildet wird.

3. Verfahren nach Anspruch 1 oder 2, **dadurch gekennzeichnet, dass** die Einzelsäule die einzige Destilliersäule des Destilliersäulen-Systems darstellt.

4. Verfahren nach einem der Ansprüche 1 bis 3, **dadurch gekennzeichnet, dass**
- eine weitere sauerstoffhaltige Fraktion (14a) flüssig aus der Einzelsäule (12) abgezogen wird,
- die flüssige weitere sauerstoffhaltige Fraktion (14a) in dem integrierten Wärmeaustauscher (101) abgekühlt wird,
- die abgekühlte weitere sauerstoffhaltige Fraktion in dem Kopfkondensator (13) verdampft wird,
- die verdampfte weitere sauerstoffhaltige Fraktion (19) in dem integrierten Wärmeaustauscher im Gegenstrom zu Luft angewärmt wird und
- die angewärmte weitere sauerstoffhaltige Fraktion in einer Entspannungsmaschine (21) arbeitsleistend entspannt wird,
- wobei die Temperatur der flüssige weitere sauerstoffhaltige Fraktion (14a) bei ihrer Einführung in den integrierten Wärmeaustauscher (101) höher ist als die Temperatur des abgekühlten Einsatzluftstroms (11) beim Abzug aus dem integrierten Wärmeaustauscher (101).

5. Verfahren nach Anspruch 4, **dadurch gekennzeichnet, dass** die sauerstoffhaltige Rückführfraktion an einer Zwischenstelle aus der Einzelsäule entnommen wird, die mindestens einen theoretischen beziehungsweise praktischen Boden oberhalb der Stelle liegt, an der die weitere sauerstoffhaltige Fraktion entnommen wird.

6. Verfahren nach einem der Ansprüche 4 oder 5, **dadurch gekennzeichnet, dass** die Entspannungsmaschine (21) mechanisch mit dem Rückverdichter (31) gekoppelt ist.

7. Vorrichtung zur Tieftemperatur-Luftzerlegung in einem Destilliersäulen-System, das mindestens eine Einzelsäule (12) aufweist,
- mit einem Hauptwärmetauscher (9) zum Abkühlen eines verdichteten Einsatzluftstroms (6, 8) im Gegenstrom zu einem ersten Rückstrom (16, 23) aus dem Destilliersäulen-System,
- mit Mitteln zum Einleiten des abgekühlten Einsatzluftstroms (11) in die Einzelsäule (12),
- mit Mitteln zum Erzeugen einer stickstoffreichen Fraktion (15) im oberen Bereich der Einzelsäule (12) erzeugt wird,
- mit einem Kopfkondensator (13) zum Kondensieren mindestens eines Teils der stickstoffreichen Fraktion (15, 16b), wobei der Kopfkondensator als Kondensator-Verdampfer ausgebildet ist,
- mit Mitteln zum Einleiten der in dem Kopfkondensator (13) erzeugten flüssigen stickstoffreichen Fraktion (52) als Rücklauf in die Einzelsäule (12),
- mit Mitteln zum Abziehen einer sauerstoffhaltigen Rückführfraktion (18a) aus der Einzelsäule (12) in flüssigem Zustand,
- mit einem Unterkühlungs-Gegenströmer (100) zum Abkühlen der flüssigen Rückführfraktion (18a),
- mit Mitteln zum Einführen der abgekühlten Rückführfraktion (18b) in den Kopfkondensator (13),
- mit einem Rückverdichter (30) zum Verdichten der die verdampften Rückführfraktion (29) aus dem Kopfkondensator (13), wobei der Rückverdichter (30) als Kaltverdichter ausgebildet ist, und
- mit Mitteln zum Einführen der rückverdichteten Rückführfraktion (31, 32) am Sumpf der Einzelsäule (12),
- der Hauptwärmetauscher (9) und der Unterkühlungs-Gegenströmer (100) durch einen integrierten Wärmeaustauscher (101) gebildet werden, wobei
- der integrierte Wärmeaustauscher (101) eine erste Passagengruppe (102) für den ersten Rückstrom (16, 23) aufweist, die vom kalten bis zum warmen Ende des integrierte Wärmeaustauschers durchgeht, wobei
- das kalte Ende des integrierten Wärmeaustauschers (101) mit Mitteln zur Einleitung des ersten Rückstroms (16, 23) in diese Passagengruppe verbunden ist,
- das warme Ende des integrierten Wärmeaustauschers (101) Mitteln zum Abziehen des ersten Rückstroms (16, 23) aus dieser Passagengruppe verbunden ist,
- der integrierte Wärmeaustauscher (1012) so ausgebildet ist, dass während des Betriebs der Vorrichtung der erste Rückstrom (16, 23) sowohl mit der flüssigen Rückführfraktion (18a) als auch mit dem Einsatzluftstrom (8) in indirekten Wärmeaustausch gebracht wird und wobei
**dadurch gekennzeichnet, dass**
- der integrierte Wärmeaustauscher (101) so ausgebildet ist, dass der erste Rückstrom (16, 23) erst im Bereich des Unterkühlungs-Gegenströmers (100) in indirekten Wärmeaustausch mit der flüssigen Rückführfraktion (18a) und anschließend, im Bereich des Hauptwärmetauschers (9), in indirekten Wärmeaustausch mit dem Einsatzluftstrom (8) gebracht wird, und dass
- die Passagen in dem integrierten Wärmeaustauscher (101) so ausgelegt sind, dass beim Betrieb der Anlage der abgekühlte Einsatzluftstrom (11) vollständig gasförmig in die Einzelsäule (12) eingeleitet wird,
- Unterkühlungs-Gegenströmer (100) so ausgebildet ist, dass die rückverdichtete Rückführfraktion (31) vor ihrer Einspeisung am Sumpf der Einzelsäule (12) im Unterkühlungs-Gegenströmer (100) wieder auf Säulentemperatur abgekühlt und vollständig gasförmig der Einzelsäule zugeführt wird.

## Claims

1. Process for cryogenic air separation in a distillation column system which has at least one single column (12), wherein
- a compressed feed air stream (6, 8) is cooled down in a main heat exchanger (9) in counter-current to a first recycle stream (16, 23) from the distillation column system,
- the cooled feed air stream (11) is led into the single column (12),
- a nitrogen-rich fraction (15) is produced in the upper region of the single column (12),
- at least part (16b) of the nitrogen-rich fraction (15) is condensed in a top condenser (13), which is constructed as a condenser-evaporator,
- at least part (54) of the liquid nitrogen-rich fraction (52) produced in the top condenser (13) is led into the single column (12) as reflux,
- an oxygen-containing recycle fraction (18a) is drawn off from the single column (12) in liquid form,
- the liquid recycle fraction (18a) is cooled down in a counter-current subcooler (100),
- the cooled recycle fraction (18b) is evaporated in the top condenser (13),
- the evaporated recycle fraction (29) is re-compressed in a re-compressor (30), the re-compressor (30) being constructed as a cold compressor,
- the re-compressed recycle fraction (31, 32) is fed to the bottom of the single column (12),
- the main heat exchanger (9) and the counter-current subcooler (100) are formed by an integrated heat exchanger (101),
- the integrated heat exchanger (101) having a first group of passages for the first recycle stream (16, 23), which goes through from the cold to the warm end of the integrated heat exchanger,
- the first recycle stream (16, 23) being led into this group of passages (102) at the cold end and flowing through the integrated heat exchanger (101) as far as its warm end and, in the process,
- being brought into indirect heat exchange both with the liquid recycle fraction (18a) and with the feed air stream (8),
- the cooled feed air stream (11) being drawn off from the integrated heat exchanger (101) in completely gaseous form and being led into the single column (12) in gaseous form,
**characterized in that**
- the first recycle stream (16, 23) is first brought into indirect heat exchange with the liquid recycle fraction (18a) in the region of the counter-current subcooler (100) and then is brought into indirect heat exchange with the feed air stream (8) in the region of the main heat exchanger (9),
- the cooled feed air stream (11) is led into the single column (12) in completely gaseous form and
- before it is fed in at the bottom of the single column (12), the re-compressed recycle fraction (31) is cooled down to column temperature again in the counter-current subcoder (100) and fed to the single column in completely gaseous form.

2. Process according to Claim 1, **characterized in that** the integrated heat exchanger is formed by a single plate-type heat exchanger block.

3. Process according to Claim 1 or 2, **characterized in that** the single column constitutes the only distillation column of the distillation column system.

4. Process according to one of Claims 1 to 3, **characterized in that**
- a further oxygen-containing fraction (14a) is drawn off from the single column (12) in liquid form,
- the liquid further oxygen-containing fraction (14a) is cooled down in the integrated heat exchanger (101),
- the cooled further oxygen-containing fraction is evaporated in the top condenser (13),
- the evaporated further oxygen-containing fraction (19) is warmed in the integrated heat exchanger in counter-current to air, and
- the warmed further oxygen-containing fraction is expanded in an expansion machine (21), producing work,
- the temperature of the liquid further oxygen-containing fraction (14a) as it is introduced into the integrated heat exchanger (101) being higher than the temperature of the cooled feed air stream (11) as it is drawn off from the integrated heat exchanger (101).

5. Process according to Claim 4, **characterized in that** the oxygen-containing recycle fraction is removed from the single column at an intermediate point which is located at least one theoretical or practical plate above the point at which the further oxygen-containing fraction is removed.

6. Process according to either of Claims 4 and 5, **characterized in that** the expansion machine (21) is coupled mechanically to the re-compressor (31).

7. Apparatus for cryogenic air separation in a distillation column system which has at least one single column (12),
- having a main heat exchanger (9) for cooling a compressed feed air stream (6, 8) in counter-current to a first recycle stream (16, 23) from the distillation column system,
- having means for leading the cooled feed air stream (11) into the single column (12),
- having means for producing a nitrogen-rich fraction (15) in the upper region of the single column (12),
- having a top condenser (13) for condensing at least part of the nitrogen-rich fraction (15, 16b), the top condenser being constructed as a condenser-evaporator,
- having means for leading the liquid nitrogen-rich fraction (52) produced in the top condenser (13) into the single column (12) as reflux,
- having means for drawing off an oxygen-containing recycle fraction (18a) from the single column (12) in the liquid state,
- having a counter-current subcooler (100) for cooling down the liquid recycle fraction (18a),
- having means for introducing the cooled recycle fraction (18b) into the top condenser (13),
- having a re-compressor (30) for compressing the evaporated recycle fraction (29) from the top condenser (13), the re-compressor (30) being constructed as a cold compressor, and
- having means for leading the re-compressed recycle fraction (31, 32) to the bottom of the single column (12),
- the main heat exchanger (9) and the counter-current subcooler (100) are formed by an integrated heat exchanger (101),
- the integrated heat exchanger (101) having a first group of passages (102) for the first recycle stream (16, 23), which goes through from the cold to the warm end of the integrated heat exchanger,
- the cold end of the integrated heat exchanger (101) being connected to means for leading the first recycle stream (16, 23) into this group of passages,
- the warm end of the integrated heat exchanger (101) being connected to means for drawing the first recycle stream (16, 23) off from this group of passages,
- the integrated heat exchanger (1012) being constructed in such a way that, during the operation of the apparatus, the first recycle stream (16, 23) is brought into indirect heat exchange both with the liquid recycle fraction (18a) and with the feed air stream (8), and wherein
**characterized in that**
- the integrated heat exchanger (101) is constructed in such a way that the first recycle stream (16, 23) is first brought into indirect heat exchange with the liquid recycle fraction (18a) in the region of the counter-current subcooler (100) and then is brought into indirect heat exchange with the feed air stream (8) in the region of the main heat exchanger (9), and **in that**
- the passages in the integrated heat exchanger (101) are laid out in such a way that, during the operation of the plant, the cooled feed air stream (11) is led into the single column (12) in completely gaseous form,
- the counter-current subcooler (100) is constructed in such a way that, before it is fed in at the bottom of the single columen (12), the re-compressed recycle fraction (31) is cooled down to column temperature again in the counter-current subcooler (100) and fed to the single column in completely gaseous form.

## Revendications

1. Procédé de séparation d'air à basse température dans un système de colonnes de distillation, lequel possède au moins une colonne individuelle (12),
- un courant d'air de charge comprimé (6, 8) dans un échangeur de chaleur principal (9) étant refroidi à contre-courant d'un premier courant de retour (16, 23) issu du système de colonnes de distillation,
- le courant d'air de charge refroidi (11) étant introduit dans la colonne individuelle (12),
- une fraction riche en azote (15) étant générée dans la zone supérieure de la colonne individuelle (12),
- au moins une partie (16b) de la fraction riche en azote (15) étant condensée dans un condenseur en pot (13), lequel est réalisé sous la forme d'un condenseur-évaporateur,
- la fraction riche en azote liquide (52) produite dans le condenseur en pot (13) étant introduite au moins en partie (54) en tant que recirculation dans la colonne individuelle (12),
- une fraction de recirculation (18a) contenant de l'oxygène étant soutirée sous forme liquide de la colonne individuelle (12),
- la fraction de recirculation liquide (18a) étant refroidie dans un générateur de contre-courant de sous-refroidissement (100),
- la fraction de recirculation refroidie (18b) étant évaporée dans le condenseur en pot (13),
- la fraction de recirculation évaporée (29) étant recomprimée dans un recompresseur (30), le recompresseur (30) étant réalisé sous la forme d'un compresseur à froid,
- la fraction de recirculation recomprimée (31, 32) étant acheminée au fond de bain de la colonne individuelle (12),
- l'échangeur de chaleur principal (9) et le générateur de contre-courant de sous-refroidissement (100) étant formés par un échangeur de chaleur intégré (101),
- l'échangeur de chaleur intégré (101) possédant un premier groupe de passages pour le premier courant de retour (16, 23), qui traverse de l'extrémité froide à l'extrémité chaude de l'échangeur de chaleur intégré,
- le premier courant de retour (16, 23) étant introduit au niveau de l'extrémité froide dans ce premier groupe de passages (102) et traversant l'échangeur de chaleur intégré (101) jusqu'à son extrémité chaude et ainsi
- étant amené en échange de chaleur indirect à la fois avec la fraction de recirculation liquide (18a) et avec le courant d'air de charge (8),
- le courant d'air de charge refroidi (11) étant extrait de l'échangeur de chaleur intégré (101) entièrement sous forme gazeuse et introduit dans la colonne individuelle (12) sous forme gazeuse, **caractérisé en ce que**
- le premier courant de retour (16, 23) est tout d'abord amené en échange de chaleur indirect avec la fraction de recirculation liquide (18a) dans la zone du générateur de contre-courant de sous-refroidissement (100) et ensuite amené en échange de chaleur indirect avec le courant d'air de charge (8) dans la zone de l'échangeur de chaleur principal (9),
- le courant d'air de charge refroidi (11) est introduit dans la colonne individuelle (12) entièrement sous forme gazeuse et
- la fraction de recirculation recomprimée (31), avant son injection au niveau du fond de bain de la colonne individuelle (12), est de nouveau refroidie à la température de la colonne dans le générateur de contre-courant de sous-refroidissement (100) et acheminée à la colonne individuelle entièrement sous forme gazeuse.

2. Procédé selon la revendication 1, **caractérisé en ce que** l'échangeur de chaleur intégré est formé par un unique bloc d'échangeur de chaleur à plaques.

3. Procédé selon la revendication 1 ou 2, **caractérisé en ce que** la colonne individuelle représente l'unique colonne de distillation du système de colonnes de distillation.

4. Procédé selon l'une des revendications 1 à 3, **caractérisé en ce que**
- une fraction contenant de l'oxygène (14a) supplémentaire est soutirée sous forme liquide de la colonne individuelle (12),
- la fraction contenant de l'oxygène (14a) supplémentaire liquide est refroidie dans l'échangeur de chaleur intégré (101),
- la fraction contenant de l'oxygène supplémentaire refroidie est évaporée dans le condenseur en pot (13),
- la fraction contenant de l'oxygène supplémentaire évaporée (19) est réchauffée dans l'échangeur de chaleur intégré à contre-courant de l'air et
- la fraction contenant de l'oxygène supplémentaire réchauffée est détendue en fournissant un travail dans une machine de détente (21),
- la température de la fraction contenant de l'oxygène (14a) supplémentaire liquide, lors de son introduction dans l'échangeur de chaleur intégré (101), étant supérieure à la température du courant d'air de charge refroidi (11) lors du soutirage hors de l'échangeur de chaleur intégré (101).

5. Procédé selon la revendication 4, **caractérisé en ce que** la fraction de recirculation contenant de l'oxygène est prélevée hors de la colonne individuelle au niveau d'un intermédiaire qui se trouve au moins un fond théorique ou pratique au-dessus de l'endroit au niveau duquel est prélevée la fraction contenant de l'oxygène supplémentaire.

6. Procédé selon l'une des revendications 4 ou 5, **caractérisé en ce que** la machine de détente (21) est couplée mécaniquement au recompresseur (31).

7. Dispositif de séparation d'air à basse température dans un système de colonnes de distillation, lequel possède au moins une colonne individuelle (12),
- comprenant un échangeur de chaleur principal (9) destiné à refroidir un courant d'air de charge comprimé (6, 8) à contre-courant d'un premier courant de retour (16, 23) issu du système de colonnes de distillation,
- comprenant des moyens destinés à introduire le courant d'air de charge refroidi (11) dans la colonne individuelle (12),
- comprenant des moyens destinés à générer une fraction riche en azote (15) dans la zone supérieure de la colonne individuelle (12),
- comprenant un condenseur en pot (13) destiné à condenser au moins une partie de la fraction riche en azote (15, 16b), le condenseur en pot étant réalisé sous la forme d'un condenseur-évaporateur,
- comprenant des moyens destinés à introduire la fraction riche en azote liquide (52) produite dans le condenseur en pot (13) en tant que recirculation dans la colonne individuelle (12),
- comprenant des moyens destinés à soutirer une fraction de recirculation (18a) contenant de l'oxygène de la colonne individuelle (12),
- comprenant un générateur de contre-courant de sous-refroidissement (100) destiné à refroidir la fraction de recirculation liquide (18a) à l'état liquide,
- comprenant des moyens destinés à introduire la fraction de recirculation refroidie (18b) dans le condenseur en pot (13),
- comprenant un recompresseur (30) destiné à comprimer la fraction de recirculation évaporée (29) issue du condenseur en pot (13), le recompresseur (30) étant réalisé sous la forme d'un compresseur à froid, et
- comprenant des moyens destinés à introduire la fraction de recirculation recomprimée (31, 32) au niveau du fond de bain de la colonne individuelle (12),
- l'échangeur de chaleur principal (9) et le générateur de contre-courant de sous-refroidissement (100) sont formés par un échangeur de chaleur intégré (101),
- l'échangeur de chaleur intégré (101) possédé un premier groupe de passages (102) pour le premier courant de retour (16, 23), qui traverse de l'extrémité froide à l'extrémité chaude de l'échangeur de chaleur intégré,
- l'extrémité froide de l'échangeur de chaleur intégré (101) étant reliée à des moyens destinés à introduire le premier courant de retour (16, 23) dans ce premier groupe de passages,
- l'extrémité chaude de l'échangeur de chaleur intégré (101) étant reliée à des moyens destinés à soutirer le premier courant de retour (16, 23) de ce premier groupe de passages,
- l'échangeur de chaleur intégré (1012) étant configuré de telle sorte que pendant le fonctionnement du dispositif, le premier courant de retour (16, 23) est amené en échange de chaleur indirect à la fois avec la fraction de recirculation liquide (18a) et avec le courant d'air de charge (8), et dans lequel **caractérisé en ce que**
- l'échangeur de chaleur intégré (101) est configuré de telle sorte que le premier courant de retour (16, 23) est tout d'abord amené en échange de chaleur indirect avec la fraction de recirculation liquide (18a) dans la zone du générateur de contre-courant de sous-refroidissement (100) et ensuite amené en échange de chaleur indirect avec le courant d'air de charge (8) dans la zone de l'échangeur de chaleur principal (9), et **en ce que**
- les passages dans l'échangeur de chaleur intégré (101) sont conçus de telle sorte que lors du fonctionnement de l'installation, le courant d'air de charge refroidi (11) est introduit dans la colonne individuelle (12) entièrement sous forme gazeuse,
- le générateur de contre-courant de sous-refroidissement (100) est configuré de telle sorte que la fraction de recirculation recomprimée (31), avant son injection au niveau du fond de bain de la colonne individuelle (12), est de nouveau refroidie à la température de la colonne dans le générateur de contre-courant de sous-refroidissement (100) et acheminée à la colonne individuelle entièrement sous forme gazeuse.
